(19) Europäisches Patentamt
European Patent Office
Office européen des brevets

(11) Veröffentlichungsnummer : **0 156 768**
**B1**

(12) # EUROPÄISCHE PATENTSCHRIFT

(45) Veröffentlichungstag der Patentschrift : **09.11.88**

(51) Int. Cl.$^4$ : **C 09 B 45/01**, C 09 B 56/02

(21) Anmeldenummer : **85810089.4**

(22) Anmeldetag : **04.03.85**

(54) **Verfahren zur Herstellung von 1:2-Chromkomplexfarbstoffen.**

(30) Priorität : **08.03.84 CH 1146/84**

(43) Veröffentlichungstag der Anmeldung : **02.10.85 Patentblatt 85/40**

(45) Bekanntmachung des Hinweises auf die Patenterteilung : **09.11.88 Patentblatt 88/45**

(84) Benannte Vertragsstaaten : **BE CH DE FR GB IT LI**

(56) Entgegenhaltungen :
**EP-A- 0 044 937**
**FR-A- 1 040 664**
**FR-A- 1 510 787**
**US-A- 2 906 746**
**US-A- 2 985 646**
**US-A- 3 939 140**

(73) Patentinhaber : **CIBA-GEIGY AG**
**Klybeckstrasse 141**
**CH-4002 Basel (CH)**

(72) Erfinder : **Iff, Walter, Dr.**
**10, les colombies Saint-Genis-les-Ollières**
**F-69290 Craponne (FR)**
Erfinder : **Parisot, Daniel**
**Bellevue D 52, rue des collonges**
**F-69230 Saint-Genis-Laval (FR)**
Erfinder : **Schaller, Hans, Dr.**
**61, rue Henri Gorjus**
**F-69004 Lyon (FR)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Chromkomplexfarbstoffe sind seit langem bekannt und werden in grossem Umfang für das Färben und Bedrucken von Textilien aus Fasermaterialien in den verschiedensten Nuancen eingesetzt. Die bekannten Verfahren zur Herstellung von 1 : 1-, symmetrischen 1 : 2-, gemischten 1 : 2- und reinen asymmetrischen 1 : 2-Chromkomplexazofarbstoffen sowie 1 : 2-Chromkomplex-azo-azomethinfarbstoffen unterscheiden sich voneinander in charakteristischer Weise ; so erfolgt die Herstellung der 1 : 1-Chromkomplexazofarbstoffe durch Metallisieren der in wässriger Lösung vorliegenden Azofarbstoffe mit überschüssigen Chrom-(III)-Salzen, wobei ein pH von ca. 1 bis 2 eingehalten wird, um die Bildung von 1 : 2-Komplexen zu vermeiden ; symmetrische und gemischte 1 : 2-Chromkomplexazofarbstoffe werden im allgemeinen in wässriger Lösung bei schwach saurem, neutralem oder schwach alkalischem pH hergestellt, wobei sich die gemischten 1 : 2-Komplexe aus den symmetrischen und dem asymmetrischen Komplex zusammensetzen ; reine asymmetrische 1 : 2-Chromkomplexazofarbstoffe sowie 1 : 2-Chromkomplex-azo-azomethinfarbstoffe konnten bisher nach der Anlagerungsmethode aus entsprechend vorgebildeten 1 : 1-Chromkomplexazofarbstoffen und metallfreien Azo- bzw. Azomethinfarbstoffen hergestellt werden.

Reine asymmetrische 1 : 2-Chromkomplexazofarbstoffe und teilweise auch 1 : 2-Chromkomplex-azo-azomethinfarbstoffe haben trotz des aufwendigen Verfahren zu ihrer Herstellung grosse Bedeutung erlangt, da diese Farbstoffe gegenüber den 1 : 1-Chromkomplexen Vorteile in faserschonenden Färbemethoden bieten, gegenüber den symmetrischen 1 : 2-Chromkomplexen Vorteile im Löslichkeitsverhalten bieten und gegenüber 1 : 2-Chrom-Mischkomplexen Vorteile in der Brillanz der Nuancen bieten.

Diese Vorteile der asymmetrischen 1 : 2-Chromkomplexfarbstoffe sind verbunden mit dem aufwendigen, mehrstufigen Herstellungsverfahren : getrennte Herstellung der nicht-metallisierten Azofarbstoffe, Herstellung eines 1 : 1-Chromkomplexazofarbstoffes und dessen Isolierung und Umsetzung des 1 : 1-Komplexes mit dem metallfreien Azofarbstoff bzw. Azomethinfarbstoff unter genauer Einhaltung der Mengenverhältnisse.

Die der vorliegenden Erfindung zugrunde liegende Aufgabe ist es, ein neues Verfahren zur Herstellung möglichst reiner, asymmetrischer 1 : 2-Chromkomplexazofarbstoffe bzw. 1 : 2-Chromkomplex-azo-azomethinfarbstoffe zu finden, das eine Eintopf-Chromierung ermöglicht und damit dem bisher üblichen zweistufigen Chromierungsschritt überlegen ist, und welches Farbstoffe von solcher Reinheit liefert, die den heutigen hohen Qualitätsanforderungen entsprechen.

Es hat sich gezeigt, dass das weiter unten beschriebene Verfahren diesen Anforderungen genügt.

Gegenstand der vorliegenden Erfindung ist somit ein Verfahren zur Herstellung von zu mindestens 90 %, insbesondere 95 %, reinen mindestens eine wasserlöslichmachende Gruppe enthaltenden, asymmetrischen 1 : 2-Chromkomplexfarbstoffen in wässrigem Medium, welches dadurch gekennzeichnet ist, dass man ein Gemisch zweier metallisierbarer Azofarbstoffe, die voneinander verschiedene Diazokomponenten und voneinander verschiedene Kupplungskomponenten enthalten, oder ein Gemisch aus einem metallisierbaren Azofarbstoff und einem metallisierbaren Azomethinfarbstoff, im molaren Verhältnis von 0,85 : 1,0 bis 1,2 : 1,0, wobei nur einer der beiden Mischungspartner mindestens eine wasserlöslichmachende Gruppe enthält, in einem Eintopfverfahren mit einem chromabgebenden Mittel unter Druck, bei einer Temperatur oberhalb von 100 °C und einem pH zwischen 0 und 2 umsetzt und anschliessend die Umsetzung in schwach saurem, neutralem oder schwach alkalischem pH weiterführt.

Mit dem erfindungsgemässen Verfahren sind überraschenderweise nahezu reine asymmetrische 1 : 2-Chromkomplexazofarbstoffe bzw. 1 : 2-Chromkomplex-azo-azomethinfarbstoffe nach einem Eintopf-Chromierungsverfahren herstellbar, die weniger als 10 % an symmetrischen 1 : 2-Komplexen enthalten. Die Eintopf-Chromierung bedeutet für die Herstellung von asymmetrischen 1 : 2-Chromkomplexen eine gegenüber dem Stand der Technik wesentliche Verfahrensvereinfachung.

Besonders bevorzugte Ausführungsformen des erfindungsgemässen Verfahrens sind dadurch gekennzeichnet, dass man

a) als Temperatur oberhalb von 100 °C eine Temperatur von 100 bis 150 °C, insbesondere 125 bis 135 °C, wählt ;

b) als pH zwischen 0 und 2 einen pH von 0 bis 1, insbesondere 0,3 bis 0,7, wählt ;

c) die Umsetzung in schwach saurem, neutralem oder schwach alkalischem pH bei einer Temperatur unterhalb von 100 °C, insbesondere bei 70 bis 100 °C, und vorzugsweise bei 90 bis 95 °C durchführt ;

d) als schwach sauren, neutralen oder schwach alkalischen pH einen pH von 5 bis 9, insbesondere 6 bis 8, wählt ;

e) ein Gemisch zweier definitionsgemäss verschiedener metallisierbarer Farbstoffe im molaren Verhältnis von 0,95 : 1,0 bis 1,05 : 1,0, insbesondere im Verhältnis von 1 : 1, verwendet ;

f) unter einem Druck von 1 bis 5 bar vorzugsweise 1 bis 3 bar chromiert ;

g) einen Ueberschuss von 1 bis 5 Mol-% an chromabgebendem Mittel verwendet.

Die Umsetzung der metallfreien Farbstoffe mit dem chromabgebenden Mittel erfolgt in wässrigem Medium in einer geschlossenen Apparatur unter Druck.

Als chromabgebende Mittel kommen Chromsalze von anorganischen oder organischen Säuren in Betracht, wie z. B. Chrom(III)-fluorid, Chrom(III)-chlorid, Chrom(III)-carbonat und insbesondere Chromver-

bindungen aliphatischer oder aromatischer Oxycarbonsäuren, die das Chrom in komplexer Bindung enthalten wie z. B. Milchsäure, Zitronensäure, Glykolsäure, Weinsäure und Salicylsäure. Werden in dem erfindungsgemässen Verfahren anorganische Chromsalze verwendet, so führt man die Chromierung vorzugsweise in Gegenwart katalytischer Mengen von Hilfskomplexverbindungen durch, wie z. B. Weinsäure, Milchsäure, Zitronensäure oder Glykolsäure oder insbesondere Salicylsäure.

Die Chromierung kann gegebenenfalls in Anwesenheit geeigneter Zusätze, wie z. B. Salze anorganischer oder organischer Säuren erfolgen, z. B. Natrium- oder Kaliumacetat, Natrium- oder Kaliumcarbonat, Natrium- oder Kaliumhydrogencarbonat.

Die Durchführung des erfindungsgemässen Verfahrens ist dadurch gekennzeichnet, dass man zur Chromierung des Reaktionsgemisches den pH mittels starker Säuren vorzugsweise anorganischer Säuren, wie z. B. Schwefelsäure, auf einen Wert zwischen 0 und 2 einstellt, unter Druck das Reaktionsgemisch auf eine Temperatur oberhalb von 100 °C aufheizt und einige Zeit, insbesondere 2 bis 10 Stunden, vorzugsweise 4 bis 8 Stunden, bei dieser Temperatur belässt, anschliessend das Reaktionsgemisch auf eine Temperatur von vorzugsweise unterhalb 100 °C abkühlen lässt und durch Zugabe von Alkali, wie z. B. Soda, einen schwach sauren, neutralen oder schwach alkalischen pH einstelllt und die Umsetzung für kurze Zeit, vorzugsweise 10 Minuten bis 3 Stunden, insbesondere 30 bis 90 Minuten, weiterführt. Die Isolierung des zu mindestens 90 % reinen asymmetrischen 1 : 2-Chromkomplexazofarbstoffes bzw. 1 : 2-Chromkomplex-azo-azomethinfarbstoffes kann nach an sich bekannten Methoden erfolgen, wie z. B. Aussalzen, Filtrieren und anschliessender Trocknung.

Die nach dem erfindungsgemässen Verfahren erhaltenen Farbstoffe liegen entweder in der Form ihrer freien Säure oder vorzugsweise als Salze vor.

Als Salze kommen beispielsweise die Alkali-, Erdalkali oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Weitere bevorzugte Ausführungsformen des erfindungsgemässen Verfahrens sind dadurch gekennzeichnet, dass man

a) von zwei getrennt hergestellten Azofarbstoffen, die den oben angegebenen Anforderungen entsprechen, ausgeht ;

b) von einem Azofarbstoff und einem Azomethinfarbstoff, die den genannten Anforderungen entsprechen, ausgeht ;

c) als Azofarbstoffe Mono- oder Disazofarbstoffe verwendet, die Diazokomponenten und Kupplungskomponenten der Benzol-, Naphthalin- oder heterocyclischen Reihe enthalten.

Die in den erfindungsgemässen Verfahren eingesetzten, metallisierbaren Azofarbstoffe bzw. Azomethinfarbstoffe enthalten als metallisierbare Gruppen insbesondere Hydroxylgruppen. Einer der eingesetzten Farbstoffe muss mindestens eine wasserlöslichmachende Gruppe, wie z. B. eine Sulfon-, Sulfonamid-, N-Mono- oder N,N-Dialkylsulfonamid- oder insbesondere Sulfonsäuregruppe, enthalten.

Als Sulfongruppe kommen Alkylsulfon-, insbesondere $C_{1-4}$-Alkylsulfongruppen in Betracht.

Als N-Mono- oder N,N-Dialkylsulfonamidgruppe kommt insbesondere eine solche mit einem oder zwei $C_{1-4}$-Alkylresten in Betracht.

Die in dem erfindungsgemässen Verfahren eingesetzten metallisierbaren Azofarbstoffe sind vorzugsweise Mono- oder Disazofarbstoffe, die Diazokomponenten und Kupplungskomponenten der Benzol-, Naphthalin- oder heterocyclischen Reihe enthalten.

Vorzugsweise verwendet man in dem erfindungsgemässen Verfahren ein Gemisch der Azofarbstoffe der Formeln

$$\underset{\displaystyle OH}{\underset{|}{D}} - N = N - \underset{\displaystyle OH}{\underset{|}{K}} \qquad (1)$$

und

$$\left[ \underset{\displaystyle OH}{\underset{|}{D'}} - N = N - \underset{\displaystyle OH}{\underset{|}{K'}} \right] \!\!-\!\!-\!\!- (SO_3M)_p \qquad (2)$$

worin D und D' unabhängig voneinander einen Benzol- oder Naphthalinrest bedeuten, der durch $C_{1-4}$-Alkyl, $C_{1-4}$-Alkoxy, Halogen, Phenylazo oder Nitro substituiert sein kann, und K und K' unabhängig voneinander einen Naphthalin- oder Pyrazolonrest bedeuten, der durch $C_{1-4}$-Alkyl, $C_{1-4}$-Alkoxy, Halogen oder Nitro substituiert sein kann, und worin die Hydroxygruppen in Nachbarstellung zur Azogruppe stehen, M ein Kation ist und D und D' und K und K' voneinander verschiedene Reste sind und p = 1 oder 2 ist.

Eine ganz besonders bevorzugte Ausführungsform ist dadurch gekennzeichnet, dass man einen Farbstoff der Formel (1), worin D ein gegebenenfalls durch Nitro, Phenylazo oder Chlor substituierter Benzolrest und K ein 1-Phenyl-3-methylpyrazolon-(5)- oder Naphthalinrest ist, der durch Chlor substituiert

sein kann, und einen Farbstoff der Formel (2), worin D' ein gegebenenfalls durch Nitro, Chlor, Methyl oder Sulfo substituierter Benzolrest oder ein gegebenenfalls durch Nitro oder Sulfo substituierter Naphthalinrest und K' ein gegebenenfalls durch Sulfo substituierter Naphthalin- oder 1-Phenyl-3-methyl-pyrazolon-(5)-rest ist, verwendet wobei der Farbstoff der Formel (2) eine einzige Sulfonsäuregruppe enthält.

Ebenfalls bevorzugt zur Herstellung von 1 : 2-Chromkomplex-azo-azomethinfarbstoffen sind Ausführungsformen des erfindungsgemässen Verfahrens, die dadurch gekennzeichnet sind, dass man

a) in einem Eintopfverfahren einen metallisierbaren Azofarbstoff zusammen mit einem aromatischen Amin und einem o-Hydroxyaldehyd, die den genannten Anforderungen entsprechen, gemäss oben angegebenen Verfahrensweise chromiert ;

b) ein Gemisch der Ausgangsfarbstoffe der Formeln

$$\left[\begin{array}{ccccccc} D'' & - & N & = & N & - & K'' \\ | & & & & & & | \\ OH & & & & & & OH \end{array}\right] - (SO_3M)_n \qquad (3)$$

und

$$\left[\begin{array}{ccccc} A & - & N = CH & - & B \\ | & & & & | \\ OH & & & & OH \end{array}\right] - (SO_3M)_m \qquad (4)$$

verwendet, worin D'' und A unabhängig voneinander einen Benzol- oder Naphthalinrest bedeuten, der durch $C_{1-4}$-Alkyl, $C_1$-$C_4$-Alkoxy, Halogen oder Nitro substituiert sein kann, K'' einen Benzol-, Naphthalin- oder Pyrazolonrest bedeutet, der durch $C_{1-4}$-Alkyl, $C_{1-4}$-Alkoxy, Halogen oder Nitro substituiert sein kann, B ein Benzol- oder Naphthalinrest bedeutet, der durch $C_{1-4}$-Alkyl, $C_{1-4}$-Alkoxy, Halogen, Nitro oder Arylazo, insbesondere Phenylazo, substituiert sein kann, und worin die Hydroxygruppen in Nachbarstellung zur Azo- oder Azomethingruppe stehen, M ein Kation ist und n und m je die Zahl 0 oder 1 und $n + m = 1$ ist.

Die in dem erfindungsgemässen Verfahren eingesetzten Azofarbstoffe sind bekannt und werden nach an sich bekannten Methoden hergestellt.

Die Diazotierung der Diazokomponenten erfolgt nach an sich bekannten Methoden, z. B. durch Einwirken salpetriger Säure in wässrig-mineralsaurer Lösung bei tiefer Temperatur, die Kupplung auf die Kupplungskomponente erfolgt ebenfalls nach an sich bekannten Methoden, z. B. bei sauren, neutralen bis alkalischen pH-Werten.

Als Diazokomponenten kommen z. B. solche der Benzol- oder Naphthalinreihe in Betracht, die ausser der metallisierbaren Gruppe und gegebenenfalls einer wasserlöslichmachenden Gruppe noch weitere Substituenten nicht salzbildender Art enthalten können, wie z. B. Nitrogruppen, Halogen, wie Fluor, Chlor und Brom, Alkylgruppen, insbesondere $C_{1-4}$-Alkylgruppen, wie z. B. Methyl, Aethyl, Propyl, Isopropyl, Butyl, Isobutyl, sek.-Butyl und tert.-Butyl, Alkoxygruppen insbesondere $C_{1-4}$-Alkoxygruppen, wie z. B. Methoxy, Aethoxy, Propoxy, Isopropoxy und Butoxy, Azogruppen wie z. B. die Phenylazogruppe.

Als Beispiele seien erwähnt : 4- oder 5-Chlor-2-aminophenol, 4-, 5- oder 6-Nitro-2-aminophenol, 4,6-Dichlor-2-aminophenol, 3,4,6-Trichlor-2-aminophenol, 4-Chlor-5- oder -6-nitro-2-aminophenol, 4-Nitro-6-chlor-2-aminophenol, 4,6-Dinitro-2-aminophenol, 1-Amino-2-hydroxynaphthalin, 2-Amino-1-hydroxybenzol-4- oder -5-sulfonsäurephenylamid, 4-Chlor-2-amino-1-hydroxybenzol-5-sulfonsäurephenyl- oder N-äthyl-N-phenylamid, 2-Aminophenol-4- oder -5-sulfonsäure, 4-Chlor- oder 4-Methyl-2-aminophenol-5- oder -6-sulfonsäure, 4-Nitro-2-aminophenol-6-sulfonsäure, 6-Nitro-2-aminophenol-4-sulfonsäure, 2-Amino-1-hydroxynaphthalin-4- oder -8-sulfonsäure, 6-Nitro-1-amino-2-hydroxynaphthalin-4-sulfonsäure, 6-Brom- oder 6-Methyl-1-amino-2-hydroxynaphthalin-4-sulfonsäure, 1-Amino-2-hydroxynaphthalin-4-sulfonsäure, 4-Chlor- oder 4-Nitro-2-aminophenol-6-sulfonsäureamid, 6-Nitro-2-aminophenol-4-sulfonsäureamid, 2-Aminophenol-4- oder -5-sulfonsäure-N-methylamid, 2-Aminophenol-4- oder -5-sulfonsäure-N-phenylamid, 2-Aminophenol-4- oder -5-sulfonsäure-N,N-dimethylamid, 4-Chlor-2-aminophenol-5-sulfonsäure-N-methyl-, äthyl-, -isopropyl- oder -phenylamid, 4-Chlor-2-aminophenol-5-sulfonsäure-N,N-dimethyl-, -diäthyl- oder N-methyl-N-phenylamid und die entsprechenden Verbindungen, die anstelle einer Sulfonsäureamidgruppe eine Methylsulfon-, Aethylsulfon-, Phenylsulfon-, p-Methyl- oder p-Chlorphenylsulfongruppe enthalten.

Als Kupplungskomponenten kommen solche in Betracht, die in Nachbarstellung an einer Hydroxygruppe kuppeln können ; darunter sind auch Ketoverbindungen zu verstehen, die in Nachbarstellung zu ihren enolisierten bzw. enolisierbaren Ketogruppe kuppelbar sind. Als Kupplungskomponenten kommen insbesondere solche der Benzol-, Naphthalin- oder heterocyclischen Reihe in Betracht, die ausser der

metallisierbaren Gruppe und gegebenenfalls einer wasserlöslichmachenden Gruppe noch weitere Substituenten nicht salzbildender Art wie bei den Diazokomponenten beschrieben, enthalten können.

Als Beispiele seien erwähnt: p-Kresol, p-tert.-Amylphenol, 1-Phenyl-3-methyl-5-pyrazolon, 1-(2'-Aethylphenyl)-3-methyl-5-pyrazolon, 1,3-Diphenyl-5-pyrazolon, 1-(2'-,3'- oder 4'-Chlorphenyl)-3-methyl-5-pyrazolon, 1-(2',5'-Dichlorphenyl)-3-methyl-5-pyrazolon, 1-(2'-,3'- oder 4'-Methylphenyl)-3-methyl-5-pyrazolon, 1-n-Octyl-3-methyl-5-pyrazolon, 8-Hydroxychinolin, Barbitursäure, 6-Brom-, 6-Methyl- oder 6-Methoxy-2-hydroxynaphthalin, 8-Chlor-1-hydroxynaphthalin, 5-Chlor-1-hydroxynaphthalin, 5,8-Dichlor-1-hydroxynaphthalin, 4,8- oder 5,8-Dichlor-2-hydroxynaphthalin, 2-Hydroxynaphthalin, 1-Hydroxynaphthalin, 1-Phenyl-3-methyl-5-pyrazolon-2'-, -3'- oder -4'-sulfonsäure, 1-(2'-Chlor-4'- oder -5'-sulfophenyl)-3-methyl-5-pyrazolon, 1-(2',5'-Dichlor-4'-sulfophenyl)-3-methyl-5-pyrazolon, 1-[Naphthyl-(1)]-3-methyl-5-pyrazolon-4'-, -5'-, -6'-, -7'- oder -8'-sulfonsäure, 1-[Naphthyl-(2')]-3-methyl-5-pyrazolon-1'- oder -8'-sulfonsäure, 2-Hydroxynaphthalin-4-, -5-, -6- oder -7-sulfonsäure, 1-Hydroxynaphthalin-4-, -5- oder -8-sulfonsäure, 1-Phenyl-3-methyl-5-pyrazolon-3'-sulfonsäureamid- oder -N-methylsulfonsäureamid, 2,4-Dihydroxychinolin, 5-Chlor-8-hydroxychinolin, 1-Hydroxynaphthalin-4-, -5- oder -8-sulfonsäureamid, 2-Hydroxynaphthalin-4-, -6- oder -7-sulfonsäureamid.

Für die Herstellung der Azomethinfarbstoffe werden in bekannter Weise die oben genannten aromatischen Amine mit o-Hydroxybenzaldehyden oder o-Hydroxynaphthaldehyden kondensiert.

Geeignete Aldehyde sind beispielsweise: 2-Hydroxybenzaldehyd, 3- und 5-Methyl-2-hydroxybenzaldehyd, 3,5- und 3,6-Dimethyl-2-hydroxybenzaldehyd, 5-Butyl-2-hydroxybenzaldehyd, 5-Chlor- oder -Brom-2-hydroxybenzaldehyd, 3- und 4-Chlor-2-hydroxybenzaldehyd, 3,5-Dichlor-2-hydroxybenzaldehyd, 3-Chlor-5-methyl-2-hydroxybenzaldehyd, 3-Methyl-5-chlor-2-hydroxybenzaldehyd, 3- und 4- und 5-Nitro-2-hydroxybenzaldehyd, 3,5-Dinitro- und 4-Chlor-5-nitro-2-hydroxybenzaldehyd, 4-Methoxy-2-hydroxybenzaldehyd, 1-Hydroxy-2-naphthaldehyd und dessen in 4-Stellung chlorierter Abkömmling; und 2-Hydroxy-1-naphthaldehyd; sowie die durch Arylazo- insbesondere Phenylazogruppen weitersubstituierten oben genannten Aldehyde, wie z. B. 2-Hydroxybenzaldehyd-5-azo-1-benzol-4-azobenzol.

Eine weitere Ausführungsform des erfindungsgemässen Verfahrens ist dadurch gekennzeichnet, dass man vor der Chromierung bei pH 0 bis 2 ein Gemisch der weiter oben definierten metallisierbaren Ausgangsfarbstoffe im molaren Verhältnis von 0,85 : 1,0 bis 1,2 : 1,0 in einem Eintopfverfahren mit einem chromabgebenden Mittel bie pH 3 bis 4 vorbehandelt, und anschliessend die Umsetzung wie oben beschrieben, d. h. unter Druck bei einer Temperatur oberhalb von 100 °C und einem pH zwischen 0 und 2 und dann bei schwach saurem, neutralem oder schwach alkalischem pH weiterführt.

Ein Vorteil der beschriebenen Vorbehandlung des erfindungsgemässen Verfahrens ist, dass insbesondere bei Ausgangsfarbstoffen, die sich nur sehr langsam bei einem pH von 0 bis 2 mit einem chromabgebenden Mittel umsetzen lassen, durch die Vorbehandlung bei pH 3 bis 4 eine Verkürzung der Reaktionszeit erzielt wird.

Die nach dem erfindungsgemässen Verfahren erhaltenen, asymmetrischen 1 : 2-Chromkomplexfarbstoffe zeichnen sich durch eine hohe Produktreinheit aus, wie sie bisher nur von nach der Anlagerungsmethode hergestellten Komplexen bekannt ist.

Insbesondere bei einem molaren Verhältnis von 1 : 1 der Mischungspartner werden nach dem erfindungsgemässen Verfahren 1 : 2-Chromkomplexe mit über 95 %-iger Reinheit erhalten. Abweichungen von dem molaren Verhältnis von 1 : 1 der Mischungspartner dienen zur Einstellung der gewünschter Nuance.

Die nach dem erfindungsgemässen Verfahren erhaltenen, asymmetrischen 1 : 2-Chromkomplexazofarbstoffe bzw. 1 : 2-Chromkomplex-azoazomethinfarbstoffe eignen sich zum Färben und Bedrucken verschiedenster Stoffe, vor allem aber zum Färben tierischer Materialien, wie Seide, Leder und insbesondere Wolle, aber auch zum Färben und Bedrucken synthetischer Fasern aus Superpolyamiden, Superpolyurethanen oder Polyacrylnitril. Sie sind vor allem zum Färben aus schwach alkalischem, neutralem oder schwach saurem, vorzugsweise essigsaurem Bad geeignet. Die so erhaltenen Färbungen sind gleichmässig, sehr brillant und haben gute Allgemeinechtheiten, insbesondere gute Licht- und Nassechtheiten.

Das genannte Textilmaterial kann dabei in den verschiedensten Verarbeitungsformen vorliegen, wie z. B. als Faser, Garn, Gewebe oder Gewirke.

In der EP-A-0 044 937 wird ein Verfahren zur Herstellung von 1 : 2-Chrom-Mischkomplexfarbstoffen beschrieben, welches jedoch nicht gleich gute Resultate wie das erfindungsgemässe Verfahren aufweist.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

(Siehe Beispiel 1 Seite 6 f.)

Beispiel 1

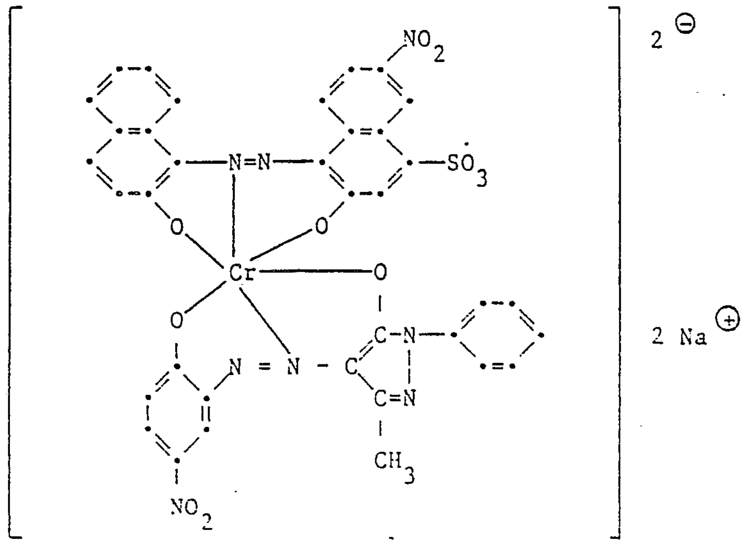

Eine Lösung aus 44 Teilen des Azofarbstoffes 6-Nitro-1-amino-2-hydroxynaphthalin-4-sulfonsäure → 2-Naphtol und 34 Teilen des Azofarbstoffes 2-Amino-4-nitrophenol → 1-Phenyl-3-methyl-5-pyrazolon wird in 1 000 Teilen Wasser mit 70 %-iger Schwefelsäure pH 1,5 gestellt und 2 Teile Salicylsaure und 16,6 Teile Chrom(III)-sulfat zugesetzt. Die Mischung wird unter einem Druck von 1,8 bis 2 bar auf 130° erhitzt und 4 Stunden bei dieser Temperatur belassen. Anschliessend wird die Mischung auf 95° abgekühlt und mit Natriumhydroxid auf pH 6 bis 7 gestellt und 1 bis 2 Stunden bei 95° gerührt. Nach beendeter Reaktion wird der Farbstoff durch Natriumchloridzugabe abgeschieden, abfiltriert und getrocknet. Der erhaltene Farbstoff besteht zu 93 % aus dem reinen asymmetrischen 1 : 2-Chromkomplexe. Die Ausbeute beträgt 95 %. Der in Wasser gut lösliche Farbstoff färbt Wolle oder Polyamid in braunen Tönen und ergibt Färbungen von guten Allgemeinechtheiten.

Beispiel 2

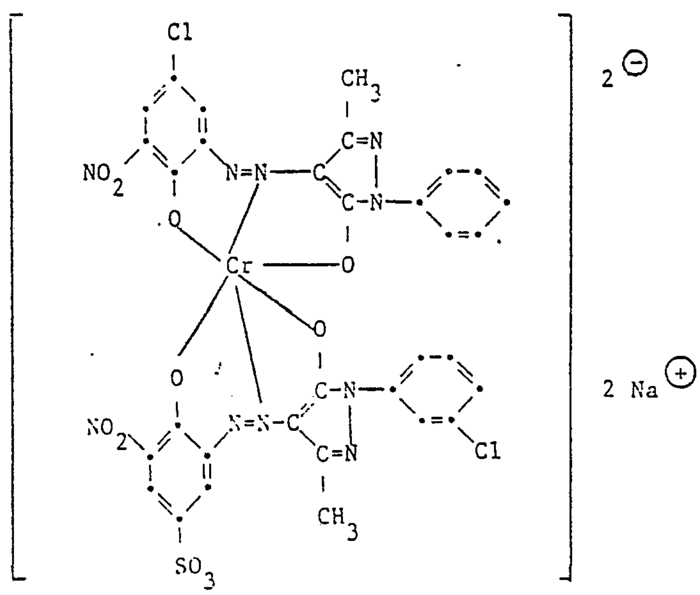

Wenn man wie in Beispiel 1 angegeben verfährt, jedoch 46 Teile des Azofarbstoffes der Formel

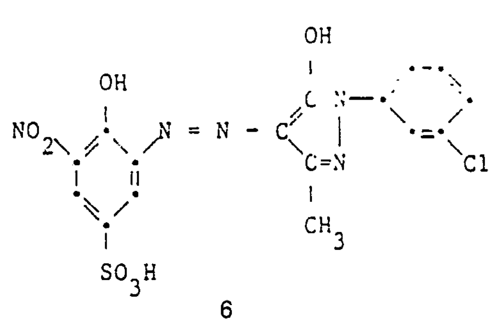

und 38 Teile des Azofarbstoffes der Formel

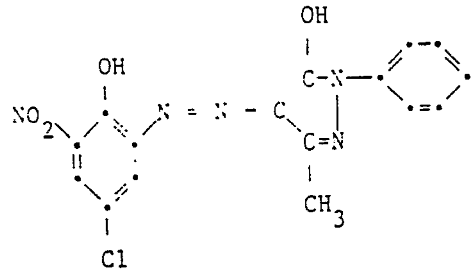

anstelle der in Beispiel 1 angegebenen Azofarbstoffe verwendet, so erhält man den Farbstoff der oben angegebenen Konstitution, der Wolle oder Polyamid in roten Tönen färbt. Der erhaltene Farbstoff besteht zu 91 % aus dem reinen asymmetrischen 1 : 2-Chromkomplexe. Die Ausbeute beträgt 90 %.

Beispiel 3

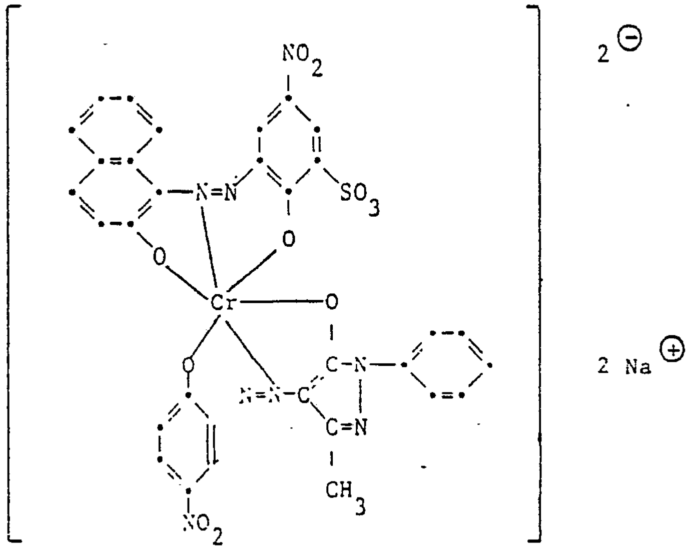

Wenn man wie in Beispiel 1 angegeben verfährt, jedoch 40 Teile des Azofarbstoffes der Formel

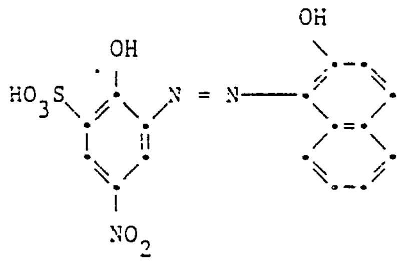

und 34 Teile des Azofarbstoffes der Formel

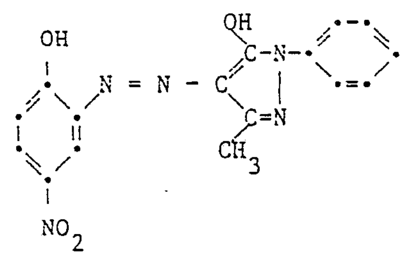

anstelle der in Beispiel 1 angegebenen Azofarbstoffe verwendet, und bei pH = 0,5 anstelle 1,5 arbeitet, so erhält man den Farbstoff der oben angegebenen Konstitution, der Wolle oder Polyamid in rötlich braunen Tönen färbt. Der erhaltene Farbstoff besteht zu 95 % aus dem reinen asymmetrischen 1 : 2-Chromkomplex. Die Ausbeute beträgt 90 %.

Beispiel 4

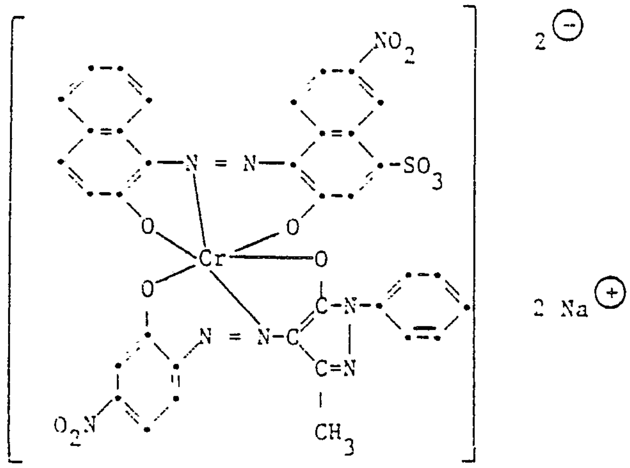

Wenn man wie in Beispiel 1 angegeben verfahrt, jedoch 44 Teile des Azofarbstoffes der Formel

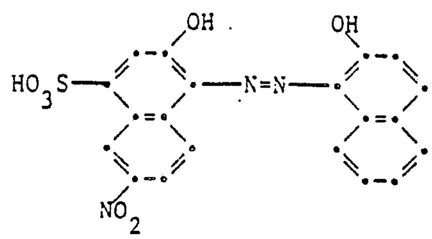

und 34 Teile des Azofarbstoffes der Formel

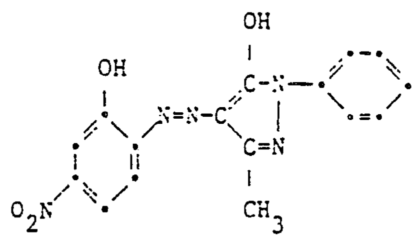

anstelle der in Beispiel 1 angegebenen Azofarbstoffe verwendet, und bei pH = 1 anstelle 1,5 arbeitet, so erhält man den Farbstoff der oben angegebenen Formel, der Wolle oder Polyamid in braunen Tönen färbt. Der erhaltene Farbstoff besteht zu 95 % aus dem reinen asymmetrischen 1 : 2-Chromkomplex. Die Ausbeute beträgt 95 %.

Beispiel 5

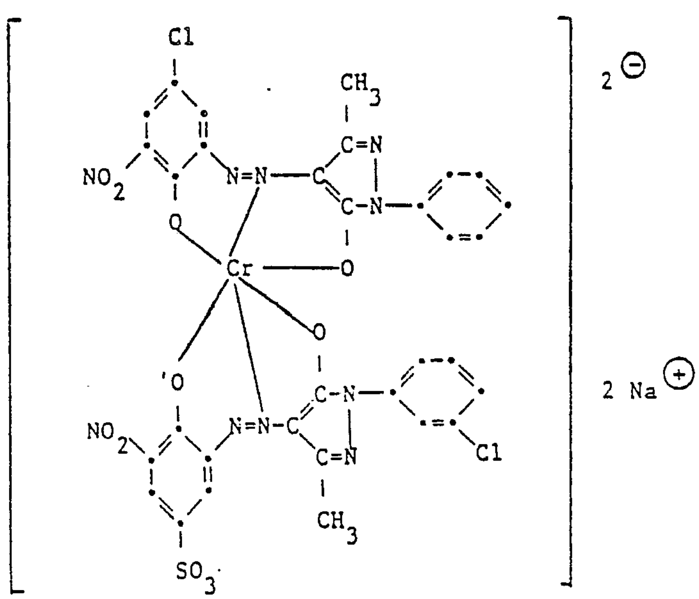

Eine Lösung aus 46 Teilen des Azofarbstoffes der Formel

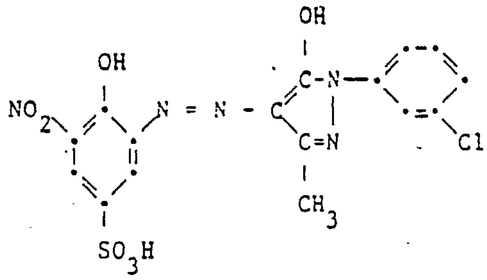

und 38 Teile des Azofarbstoffes der Formel

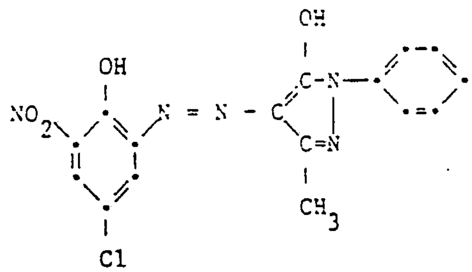

wird in 1 000 Teilen Wasser mit 70 %-iger Schwefelsäure auf pH 3,5 gestellt und 2 Teile Salicylsäure und 16,6 Teile Chrom(III)-sulfat werden zugesetzt. Die Mischung wird bei pH 3,5 so lange gerührt, bis kein metallfreier Azofarbstoff nachweisbar ist. Anschliessend wird die Mischung der gebildeten 1 : 2-Chromkomplexe mit 70 %-iger Schwefelsäure auf pH 0,5 gestellt und unter einem Druck von 1,8 bis 2 bar auf 135° erhitzt und 4 Stunden bei dieser Temperatur belassen. Anschliessend wird die Mischung auf 95° abgekühlt und mit Natriumhydroxid auf pH 7 gestellt und 1 bis 2 Stunden bei 95° gerührt. Nach beendeten Reaktion wird der Farbstoff durch Natriumchloridzugabe abgeschieden, abfiltriert und getrocknet. Der erhaltene Farbstoff besteht zu 91 % aus dem reinen asymmetrischen 1 : 2-Chromkomplex. Die Ausbeute beträgt 90 %. Der so erhaltene Farbstoff der oben angegebenen Konstitution färbt Wolle oder Polyamid in roten Tönen.

Beispiel 6

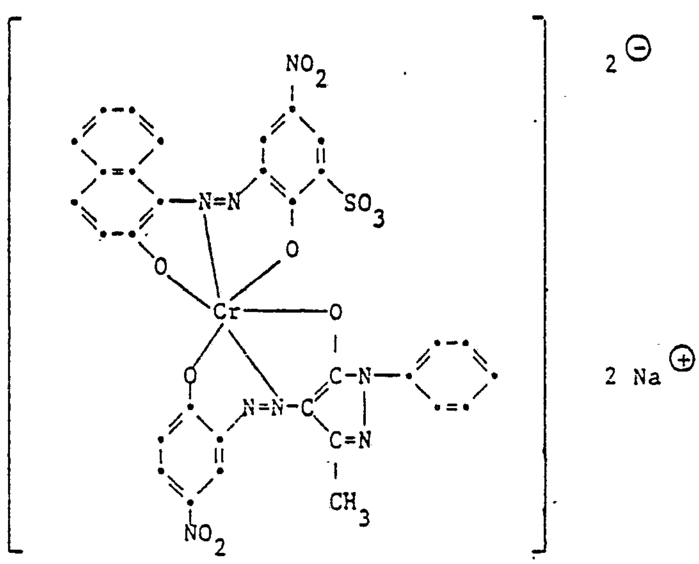

Wenn man wie in Beispiel 5 angegeben verfährt, jedoch 40 Teile des Azofarbstoffes der Formel

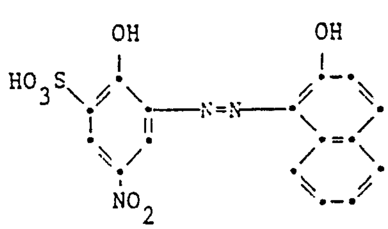

und 34 Teile des Azofarbstoffes der Formel

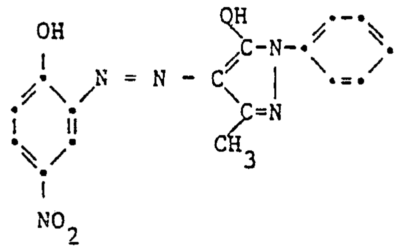

anstelle der in Beispiel 5 angegebenen Azofarbstoffe verwendet, und bei pH = 1 anstelle 0,5 arbeitet, so erhält man den Farbstoff der oben angegebenen Konstitution, der Wolle oder Polyamid in rötlich braunen Tönen färbt. Der erhaltene Farbstoff besteht zu 95 % aus dem reinen asymmetrischen 1 : 2-Chromkomplex. Die Ausbeute beträgt 90 %.

Färbevorschrift für Wolle

In 4 000 Teilen Wasser löst man 4 Teile des chromhaltigen Farbstoffs gemäss Beispiel 1 und geht bei 40-50° mit 100 Teilen gut befeuchteter Wolle in das Färbebad ein.

Man fügt hierauf 2 Teile 40 %-ige Essigsäure hinzu, erhitzt das Bad innert 1/2 Stunde zum Sieden und hält 3/4 Stunden bei Siedetemperatur. Hierauf spült man die Wolle mit kaltem Wasser und trocknet sie. Die braune Färbung zeichnet sich durch gute Nassechtheiten und hohe Lichtechtheit aus.

Färbevorschrift für Polyamid

In ein Färbebad, das aus 3 000 Teilen Wasser, 5 Teilen 40 %-iger Essigsäure, 10 Teilen Natriumsulfat und 2 Teilen des im Beispiel 1 erwähnten Chromkomplexes besteht, wird bei einer Temperatur von 50 bis 60° mit 100 Teilen Nylon-6,6-Gewebe eingegangen. Nachdem innerhalb einer halben Stunde das Bad zum Kochen erhitzt wurde, wird eine weitere Stunde bei Siedetemperatur gefärbt. Nach dem Spülen und Trocknen resultiert eine gleichmässige braune Färbung.

**Patentansprüche**

1. Verfahren zur Herstellung von zu mindestens 90 % reinen mindestens eine wasserlöslichmachende Gruppe enthaltenden, asymmetrischen 1 : 2-Chromkomplexfarbstoffen in wässrigem Medium, dadurch gekennzeichnet, dass man ein Gemisch zweier metallisierbarer Azofarbstoffe, die voneinander verschiedene Diazokomponenten und voneinander verschiedene Kupplungskomponenten enthalten oder ein Gemisch aus einem metallisierbaren Azofarbstoff und einem metallisierbaren Azomethinfarbstoff, im molaren Verhältnis von 0,85 : 1,0 bis 1,2 : 1,0, wobei nur einer der beiden Mischungspartner mindestens eine wasserlöslichmachende Gruppe enthält, in einem Eintopfverfahren mit einem chromabgebenden Mittel unter Druck, bei einer Temperatur oberhalb von 100 °C und einem pH zwischen 0 und 2 umsetzt und anschliessend die Umsetzung in schwach saurem, neutralem oder schwach alkalischem pH weiterführt.

2. Verfahren gemäss Anspruch 1, dadurch gekennzeichnet, dass man als Temperatur oberhalb von 100 °C eine Temperatur von 100 bis 150 °C, insbesondere 125 bis 135 °C, wählt.

3. Verfahren gemäss Anspruch 1, dadurch gekennzeichnet, dass man als pH zwischen 0 und 2 einen pH von 0 bis 1, insbesondere 0,3 bis 0,7 wählt.

4. Verfahren gemäss Anspruch 1, dadurch gekennzeichnet, dass man die Umsetzung in schwach saurem, neutralem oder schwach alkalischem pH bei einer Temperatur unterhalb von 100 °C, insbesondere bei 70 bis 100 °C, und vorzugsweise bei 90 bis 95 °C, durchführt.

5. Verfahren gemäss Anspruch 1, dadurch gekennzeichnet, dass man als schwach sauren, neutralen oder schwach alkalischen pH einen pH von 5 bis 9, insbesondere 6 bis 8, wählt.

6. Verfahren gemäss Anspruch 1, dadurch gekennzeichnet, dass man ein Gemisch zweier metallisierbarer Ausgangsfarbstoffe im molaren Verhältnis von 0,95 : 1,0 bis 1,05 : 1,0, insbesondere im Verhältnis von 1 : 1, verwendet.

7. Verfahren gemäss Anspruch 1, dadurch gekennzeichnet, dass man unter einem Druck von 1 bis 5 bar vorzugsweise 1 bis 3 bar chromiert.

8. Verfahren gemäss Anspruch 1, dadurch gekennzeichnet, dass man einen Ueberschuss von 1 bis 5 Mol-% an chromabgebendem Mittel verwendet.

9. Verfahren gemäss Anspruch 1, dadurch gekennzeichnet, dass man die Chromierung in Gegenwart katalytischer Mengen von Hilfskomplexverbindungen, insbesondere Weinsäure, Milchsäure, Zitronensäure oder Glykolsäure oder vorzugsweise Salicylsäure, durchführt.

10. Verfahren gemäss den Ansprüchen 1 bis 9, dadurch gekennzeichnet, dass man von zwei getrennt

hergestellten Azofarbstoffen, die den in Anspruch 1 angegebenen Anforderungen entsprechen, ausgeht.

11. Verfahren gemäss den Ansprüchen 1 bis 9, dadurch gekennzeichnet, dass man von einem Azofarbstoff und einem Azomethinfarbstoff, die den in Anspruch 1 angegebenen Anforderungen entsprechen, ausgeht.

12. Verfahren gemäss einem der Ansprüche 1, 10 und 11, dadurch gekennzeichnet, dass man als Azofarbstoffe Mono- oder Disazofarbstoffe verwendet, die Diazokomponenten und Kupplungskomponenten der Benzol-, Naphthalin- oder heterocyclischen Reihe enthalten.

13. Verfahren gemäss einem der Ansprüche 1, 10 und 11, dadurch gekennzeichnet, dass man Ausgangsfarbstoffe verwendet, die als metallisierbare Gruppen Hydroxylgruppen enthalten.

14. Verfahren gemäss den Ansprüchen 1 und 10 bis 13, dadurch gekennzeichnet, dass man Ausgangsfarbstoffe verwendet, die als wasserlöslichmachende Gruppe eine Sulfon-, Sulfonamid-, N-Mono- oder N,N-Dialkylsulfonamid- oder Sulfonsäure-Gruppe enthalten.

15. Verfahren gemäss Anspruch 14, dadurch gekennzeichnet, dass man Ausgangsfarbstoffe verwendet, die eine Sulfonsäuregruppe enthalten.

16. Verfahren gemäss Anspruch 12, dadurch gekennzeichnet, dass man ein Gemisch der Azofarbstoffe der Formeln

$$\underset{\displaystyle OH}{\underset{|}{D}} - N = N - \underset{\displaystyle OH}{\underset{|}{K}} \qquad (1)$$

und

$$\left[ \underset{\displaystyle OH}{\underset{|}{D'}} - N = N - \underset{\displaystyle OH}{\underset{|}{K'}} \right] \!\!-\!\! (SO_3M)_p \qquad (2)$$

verwendet, worin D und D′ unabhängig voneinander einen Benzol- oder Naphthalinrest bedeuten, der durch $C_{1-4}$-Alkyl, $C_{1-4}$-Alkoxy, Halogen, Phenylazo oder Nitro substituiert sein kann, und K und K′ unabhängig voneinander einen Naphthalin- oder Pyrazolonrest bedeuten, der durch $C_{1-4}$-Alkyl, $C_{1-4}$-Alkoxy, Halogen oder Nitro substituiert sein kann, und worin die Hydroxygruppen in Nachbarstellung zur Azogruppe stehen, M ein Kation ist und D und D′ und K und K′ voneinander verschiedene Reste sind und p = 1 oder 2 ist.

17. Verfahren gemäss Anspruch 16, dadurch gekennzeichnet, dass man einen Farbstoff der Formel (1), worin D ein gegebenenfalls durch Nitro, Phenylazo oder Chlor substituierter Benzolrest und K ein 1-Phenyl-3-methylpyrazolon-(5)- oder Naphthalinrest ist, der durch Chlor substituiert sein kann, und einen Farbstoff der Formel (2), worin D′ ein gegebenenfalls durch Nitro, Chlor, Methyl oder Sulfo substituierter Benzolrest oder ein gegebenenfalls durch Nitro oder Sulfo substituierter Naphthalinrest und K′ ein gegebenenfalls durch Sulfo substituierter 1-Phenyl-3-methyl-pyrazolon-(5)- oder Naphthalinrest ist, verwendet, wobei der Farbstoff der Formel (2) eine einzige Sulfonsäuregruppe enthält.

18. Verfahren gemäss Anspruch 1, dadurch gekennzeichnet, dass man in einem Eintopfverfahren einen metallisierbaren Azofarbstoff zusammen mit einem aromatischen Amin und einem o-Hydroxyaldehyd, die den in Anspruch 1 angegebenen Anforderungen entsprechen, gemäss der in Anspruch 1 angegebenen Verfahrensweise chromiert.

19. Verfahren gemäss einem der Ansprüche 1 und 11, dadurch gekennzeichnet, dass man ein Gemisch der Ausgangsfarbstoffe der Formeln

$$\left[ \underset{\displaystyle OH}{\underset{|}{D''}} - N = N - \underset{\displaystyle OH}{\underset{|}{K''}} \right] \!\!-\!\! (SO_3M)_n \qquad (3)$$

$$\left[ \underset{\displaystyle OH}{\underset{|}{A}} - N = CH - \underset{\displaystyle OH}{\underset{|}{B}} \right] \!\!-\!\! (SO_3M)_m \qquad (4)$$

verwendet, worin D″ und A unabhängig voneinander einen Benzol- oder Naphthalinrest bedeuten, der durch $C_{1-4}$-Alkyl, $C_{1-4}$-Alkoxy, Halogen oder Nitro substituiert sein kann, K″ einen Benzol-, Naphthalin- oder Pyrazolonrest bedeutet, der durch $C_{1-4}$-Alkyl, $C_{1-4}$-Alkoxy, Halogen oder Nitro substituiert sein

kann, B ein Benzol- oder Naphthalinrest bedeutet, der durch $C_{1-4}$-Alkyl, $C_{1-4}$-Alkoxy, Halogen, Nitro oder Arylazo, insbesondere Phenylazo, substituiert sein kann, und worin die Hydroxygruppen in Nachbarstellung zur Azo- oder Azomethingruppe stehen, M ein Kation ist und n und m je die Zahl 0 oder 1 und n + m = 1 ist.

20. Verfahren gemäss Ansprüchen 1 bis 19, dadurch gekennzeichnet, dass man zu mindestens 95 % reine asymmetrische 1 : 2-Chromkomplexfarbstoffe erhält.

21. Verfahren gemäss Anspruch 1, dadurch gekennzeichnet, dass man vor der Chromierung bei pH 0 bis 2 die definierten metallisierbaren Ausgangsfarbstoffe in einem Eintopfverfahren mit einem chromabgebenden Mittel bei pH 3 bis 4 vorbehandelt.

## Claims

1. A process for the preparation, in aqueous medium, of asymmetric 1 : 2 chromium complex dyes of not less than 90 % purity and containing at least one water-solubilising group, which process comprises, in a single vessel process, reacting a mixture of two metallisable azo dyes that contain diazo components that differ from one another and coupling components that differ from one another, or a mixture of a metallisable azo dye and a metallisable azomethine dye, in the molar ratio of 0.85 : 1.0 to 1.2 : 1.0, where only one of the two mixture components contains at least one water-solubilising group, with a chromium donor, under pressure and at a temperature above 100 °C and at a pH between 0 and 2, and subsequently continuing the reaction at a weakly acid, neutral or weakly alkaline pH.

2. A process according to claim 1, which comprises choosing as temperature above 100 °C a temperature from 100 to 150 °C, in particular from 125 to 135 °C.

3. A process according to claim 1, which comprises choosing as pH between 0 and 2 a pH from 0 to 1, in particular 0.3 to 0.7.

4. A process according to claim 1, which comprises carrying out the reaction at a weakly acid, neutral or weakly alkaline pH at a temperature below 100 °C, in particular at 70 to 100 °C and, preferably 90 to 95 °C.

5. A process according to claim 1, which comprises choosing as weakly acid, neutral or weakly alkaline pH a pH from 5 to 9, in particular from 6 to 8.

6. A process according to claim 1, which comprises using a mixture of two metallisable starting dyes in the molar ratio of 0.95 . 1.0 to 1.05 : 1.0, in particular in the ratio of 1 : 1.

7. A process according to claim 1, which comprises chroming under a pressure of 1 to 5 bar, preferably of 1 to 3 bar.

8. A process according to claim 1, which comprises using an excess of 1 to 5 mol-% of chromium donor.

9. A process according to claim 1, which comprises carrying out the chroming in the presence of a catalytic amount of a complexing assistant, in particular tartaric acid, lactic acid, citric acid or glycollic acid or, preferably, salicylic acid.

10. A process according to any one of claims 1 to 9, which comprises starting from two separately prepared azo dyes that meet the requirements stated in claim 1.

11. A process according to any one of claims 1 to 9, which comprises starting from an azo dye and an azomethine dye that meet the requirements stated in claim 1.

12. A process according to any one of claims 1, 10 and 11, which comprises using, as azo dyes, monoazo or disazo dyes that contain diazo components and coupling components of the benzene, naphthalene or heterocyclic series.

13. A process according to any one of claims 1, 10 and 11, which comprises the use of starting dyes that contain hydroxyl groups as metallisable groups.

14. A process according to any one of claims 1 and 10 to 13, which comprises the use of starting dyes that contain a sulfone, sulfonamide, N-monoalkylsulfonamide or N,N-dialkylsulfonamide or sulfonic acid group as water-solubilising group.

15. A process according to claim 14, which comprises the use of starting dyes that contain a sulfonic acid group.

16. A process according to claim 12, which comprises the use of a mixture of azo dyes of the formulae

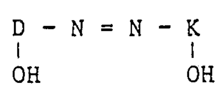

(1)

and

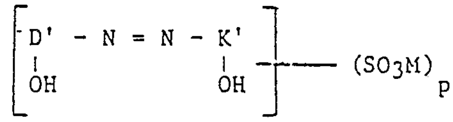

(2)

in which D and D′ are each independently of the other a benzene or naphthalene radical which can be substituted by $C_1$-$C_4$-alkyl, $C_1$-$C_4$-alkoxy, halogen, phenylazo or nitro, and K and K′ are each independently of the other a naphthalene or pyrazolone radical which can be substituted by $C_1$-$C_4$-alkyl, $C_1$-$C_4$-alkoxy, halogen or nitro, and in which the hydroxyl groups are vicinal to the azo group, M is a cation, and D and D′ and K and K′ are radicals that differ from one another and p is 1 or 2.

17. A process according to claim 16, which comprises the use of a dye of the formula (1), in which D is a benzene radical which may be substituted by nitro, phenylazo or chlorine, and K is a 1-phenyl-3-methylpyrazol-5-one or naphthalene radical which may be substituted by chlorine, and a dye of the formula (2), in which D′ is a benzene radical which may be substituted by nitro, chlorine, methyl or sulfo, or is a naphthalene radical which may be substituted by nitro or sulfo, and K′ is a 1-phenyl-3-methylpyrazol-5-one or naphthalene radical which may be substituted by sulfo, where the dye of the formula (2) contains a single sulfonic acid group.

18. A process according to claim 1, which comprises, in a single vessel process, chroming in accordance with the procedure described in claim 1, a metallisable azo dye together with an aromatic amine and an o-hydroxyaldehyde which meet the requirements specified in claim 1.

19. A process according to either claim 1 or claim 11, which comprises using a mixture of the starting dyes of the formulae

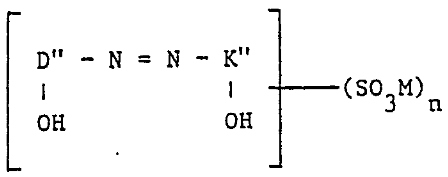

(3)

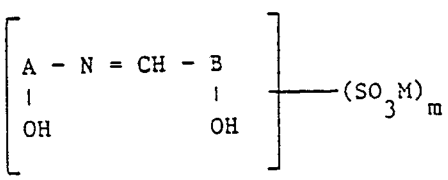

(4)

wherein D″ and A are each independently of the other a benzene or naphthalene radical which may be substituted by $C_1$-$C_4$-alkyl, $C_1$-$C_4$-alkoxy, halogen or nitro, K″ is a benzene, naphthalene or pyrazolone radical which may be substituted by $C_1$-$C_4$alkyl, $C_1$-$C_4$alkoxy, halogen or nitro, B is a benzene or naphthalene radical which may be substituted by $C_1$-$C_4$alkyl, $C_1$-$C_4$alkoxy, halogen, nitro or arylazo, in particular phenylazo, and in which the hydroxyl groups are vicinal to the azo or azomethine group, M is a cation, and each of n and m is 0 or 1 and the sum of n + m is 1.

20. A process according to any one of claims 1 to 19, wherein an asymmetric 1 : 2 chromium complex dye of not less than 95 % purity is obtained.

21. A process according to claim 1, which comprises, in a single vessel process, pretreating the defined metallisable starting dyes, prior to the chroming at pH 0 to 2, with a chromium donor at pH 3 to 4.

**Revendications**

1. Procédé pour préparer en milieu aqueux des colorants complexes 1 : 2 de chrome, asymétriques et porteurs d'au moins un groupement hydrosolubilisant, purs à au moins 90 %, caractérisé en ce que l'on fait réagir soit un mélange de deux colorants azoïques métallables qui contiennent des composants diazo différents l'un de l'autre et des composants de copulation différents l'un de l'autre, soit un mélange d'un colorant azoïque métallable et d'un colorant azométhinique métallable, dans un rapport molaire compris entre 0,85 : 1,0 et 1,2 : 1,0, mélanges dans lesquels seul l'un des deux participants contient au moins un groupement hydrosolubilisant, avec un produit donneur de chrome, en un procédé effectué dans un seul réacteur, sous pression, à une température supérieure à 100 °C et à un pH compris entre 0 et 2, et en ce que la réaction est poursuivie ensuite à pH faiblement acide, neutre ou faiblement basique.

2. Procédé selon la revendication 1, caractérisé en ce que l'on choisit, comme température supérieure à 100 °C, une température comprise entre 100 et 150 °C, en particulier entre 125 et 135 °C.

3. Procédé selon la revendication 1, caractérisé en ce que l'on choisit, comme pH compris entre 0 et 2, un pH compris entre 0 et 1, en particulier entre 0,3 et 0,7.

4. Procédé selon la revendication 1, caractérisé en ce que l'on effectue la réaction à pH faiblement acide, neutre ou faiblement basique, à une température inférieure à 100 °C, en particulier comprise entre 70 et 100 °C, et de préférence entre 90 et 95 °C.

5. Procédé selon la revendication 1, caractérisé en ce que l'on choisit, comme pH faiblement acide, neutre ou faiblement basique, un pH compris entre 5 et 9, en particulier entre 6 et 8.

6. Procédé selon la revendication 1, caractérisé en ce que l'on emploie un mélange de deux colorants métallables de départ dans un rapport molaire de 0,95 : 1,0 à 1,05 : 1,0, en particulier dans un rapport de 1 : 1.

7. Procédé selon la revendication 1, caractérisé en ce que l'on réalise la chromation sous une pression comprise entre 1 et 5 bars, de préférence entre 1 et 3 bars.

8. Procédé selon la revendication 1, caractérisé en ce que l'on emploie un excès de produit donneur de chrome compris entre 1 et 5 % en moles.

9. Procédé selon la revendication 1, caractérisé en ce que l'on effectue la chromation en présence d'une quantité catalytique de composés complexants auxiliaires, en particulier acide tartrique, acide lactique, acide citrique ou acide glycolique ou de préférence, acide salicylique.

10. Procédé selon les revendications 1 à 9, caractérisé en ce que l'on part de deux colorants azoïques préparés séparément, et qui répondent aux exigences mentionnées dans la revendication 1.

11. Procédé selon les revendications 1 à 9, caractérisé en ce que l'on part d'un colorant azoïque et d'un colorant azométhinique qui répondent aux exigences de la revendication 1.

12. Procédé selon les revendications 1, 10 et 11, caractérisé en ce que l'on emploie comme colorants azoïques, des colorants monoazoïques ou disazoïques, qui contiennent des composants diazo et des composants de copulation des séries benzénique, naphtalénique ou hétérocyclique.

13. Procédé selon les revendications 1, 10 et 11, caractérisé en ce que l'on emploie des colorants de départ qui contiennent, comme groupements métallables, des groupements hydroxyles.

14. Procédé selon les revendications 1, 10 et 11, caractérisé en ce que l'on emploie des colorants de départ qui contiennent, comme groupement hydrosolubilisant, un groupement sulfone, sulfonamide, N-monoalkylsulfonamide ou N,N-dialkylsulfonamide ou acide sulfonique.

15. Procédé selon la revendication 14, caractérisé en ce que l'on emploie des colorants de départ qui contiennent un groupement acide sulfonique.

16. Procédé selon la revendication 12, caractérisé en ce que l'on emploie un mélange de colorants azoïques de formules :

$$\underset{\displaystyle OH}{\overset{\displaystyle D}{|}} - N = N - \underset{\displaystyle OH}{\overset{\displaystyle K}{|}} \qquad (1)$$

et

$$\left[\underset{\displaystyle OH}{\overset{\displaystyle D'}{|}} - N = N - \underset{\displaystyle OH}{\overset{\displaystyle K'}{|}}\right] \!\!-\!\!-\!\!-\, (SO_3M)_p \qquad (2)$$

dans lesquelles D et D' représentent indépendamment l'un de l'autre, un radical benzénique ou naphtalénique, qui peut être substitué par un groupement alkyle en $C_{1-4}$, un groupement alcoxy en $C_{1-4}$, un halogène, un groupement phénylazo ou un groupement nitro, et K et K' représentent indépendamment l'un de l'autre, un radical naphtalénique ou pyrazolonique, qui peut être substitué par un groupement alkyle en $C_{1-4}$, un groupement alcoxy en $C_{1-4}$, un halogène ou un groupement nitro, et dans lesquelles les groupements hydroxyles sont en position voisine du groupement azoïque, M est un cation, et D et D' et K et K' sont des radicaux différents les uns des autres, et p = 1 ou 2.

17. Procédé selon la revendication 16, caractérisé en ce que l'on emploie un colorant de formule (1), dans lequel D est un radical benzénique, éventuellement substitué par un groupement nitro, phénylazo ou chloro et dans lequel K est un radical naphtalénique ou 1-phényl-3-méthylpyrazolone-(5)-ique qui peut être substitué par du chlore, et en ce que l'on emploie un colorant de formule (2), dans lequel D' est un radical benzénique éventuellement substitué par un groupement nitro, chloro, méthyl ou sulfo, ou bien un radical naphtalénique éventuellement substitué par un groupement nitro ou sulfo, et dans lequel K' est un radical naphtalénique ou 1-phényl-3-méthylpyrazolone-(5)-ique éventuellement substitué par un groupement sulfo, le colorant de formule (2) ne portant qu'un seul groupement acide sulfonique.

18. Procédé selon la revendication 1, caractérisé en ce que l'on chrome, conformément au mode opératoire mentionné dans la revendication 1, un colorant azoïque métallable, conjointement avec une amine aromatique et un o-hydroxyaldéhyde qui répondent aux exigences de la revendication 1, selon un procédé effectué dans un seul réacteur.

19. Procédé selon l'une des revendications 1 et 11, caractérisé en ce que l'on emploie un mélange de colorants de départ de formules :

$$\left[\underset{\displaystyle OH}{\overset{\displaystyle D''}{|}} - N = N - \underset{\displaystyle OH}{\overset{\displaystyle K''}{|}}\right] \!\!-\!\!-\!\!-\, (SO_3M)_n \qquad (3)$$

$$\left[ \begin{array}{lcr} A - N = CH - B & & \\ | \qquad\qquad\quad | & & \\ OH \qquad\qquad OH & & \end{array} \right] - (SO_3M)_m \qquad (4)$$

dans lesquelles D" et A représentent indépendamment l'un de l'autre, un radical benzénique ou naphtalénique indépendants l'un de l'autre, qui peut être substitué par un groupement alkyle en $C_{1-4}$, un groupement alçoxy en $C_{1-4}$, un halogène ou un groupement nitro, K" représente un radical benzénique, naphtalénique ou pyrazolonique qui peut être substitué par un groupement alkyle en $C_{1-4}$, un groupement alcoxy en $C_{1-4}$, un halogène ou un groupement nitro, B représente un radical benzénique ou naphtalénique qui peut être substitué par un groupement alkyle en $C_{1-4}$, un groupement alcoxy en $C_{1-4}$, un halogène, un groupement nitro ou arylazo, en particulier phénylazo, et dans lesquelles les groupements hydroxyles sont en position voisine du groupement azoïque ou azométhinique, M est un cation, et n et m prennent les valeurs 0 ou 1, avec n + m = 1.

20. Procédé selon les revendications 1 à 19, caractérisé en ce que l'on obtient des colorants complexes 1 : 2 de chrome asymétriques, à un degré de pureté d'au moins 95 %.

21. Procédé selon la revendication 1, caractérisé en ce que l'on traite au préalable les colorants de départ métallables décrits avec un produit donneur de chrome, en un procédé effectué dans un seul réacteur, à un pH de 3 à 4, avant chromation à un pH de 0 à 2.